# EUROPEAN PATENT APPLICATION

(11) **EP 3 258 246 A1**
(43) Date of publication of application: **20.12.2017**
(21) Application number: 15882026.6
(22) Date of filing: 27.10.2015
(51) Int. Cl.: G01N 21/62, G01N 23/225, G01N 27/62

(54) **ANALYSIS METHOD AND ANALYSIS DEVICE PROVIDED WITH SAME**

(30) Priority: 09.02.2015 JP 2015022840
(71) Applicant: Toray Research Center, Inc., Chuo-ku, Tokyo 103-0023 (JP)
(72) Inventor: MIYAMOTO, Takashi, Otsu-shi Shiga 520-8567 (JP); YOSHIKAWA, Masanobu, Otsu-shi Shiga 520-8567 (JP)
(74) Representative: Kador & Partner
(86) International application number: PCT/JP2015/080216
(87) International publication number: WO 2016/129152

(57) **Abstract**

Provided is a device capable of evaluating an atomic emission profile or cathode luminescence at an exceptional depth-direction resolution at the same time as or separately from a surface analysis method using ion sputtering. An ion-beam-induced atomic emission spectrometer wherein a commercial ultra-high vacuum surface analysis apparatus is provided, within a radius of 30 to 50 cm from a sputtering ion or electron beam irradiation position, with an optical system of a light emission detector and a spectrograph for spectroscopy of an atomic emission spectrum or cathode luminescence emitted from a sample.

## Description

### Technical Field

The present invention relates to a method for conducting an analysis in the depth direction by irradiating ions to a sample in vacuum atmosphere and analyzing mass of the secondary ions ejected by this sputtering of the sample, and simultaneously separating the emission spectrum emitted from the sample to thereby analyze the sample in the depth direction. The present invention also relates to an analysis device provided with such method.

### Background Art

When the surface of a sample is irradiated with ions (a bundle of accelerated ions), the atoms at and near the surface are agitated, and some of the atoms are ejected into the vacuum. It has been found in the 1970's that atomic emission is observed in this process (Non-Patent Document 1), and this process has been referred to as ion impact radiation (Surface Composition by Analysis of Neutral and Ion Impact Radiation; SCANIIR) (Non-Patent Document 2). This method, however, was not practically used in those days due to the low ion impact radiation intensity. Instead, use of secondary ion mass spectrometry (SIMS) has been popular since then because of the availability of the highly sensitive mass spectrometers. SIMS is a method wherein components in the sample are qualitatively and quantitatively analyzed by conducting the secondary ion mass spectrometry in the particles that had been ejected by the irradiation of the sample with the sputtering ion (primary ion). The type of the SIMS where minute amount of impurities in the solid are mainly analyzed is called Dynamic SIMS (D-SIMS), and in this method, oxygen and cesium ions are mainly used for the sputtering ion. The mass spectrometers used are quadrupole and sector (double-focusing) mass spectrometers. Unlike the D-SIMS where the sputtering ion also plays the role of primary ion, the primary ion of low current density (1 x 10⁻¹² ions/cm²) is used apart from the sputtering ion in the case of time-of-flight mass spectrometer (TOF-SIMS). In addition, in SIMS, an electron beam (a bundle of accelerated electrons) is generally used to neutralize the charging of the sample by the sputtering ion, and an electron gun is provided for this purpose.

SIMS is an analytical technique used for analyzing impurities, and concentration of the impurities can be quantitatively determined from intensity of the impurities obtained from the sample to be evaluated by determining relative sensitivity constant from the intensity obtained for the samples of known concentration. The composition cannot be quantitatively determined while such determination is possible in some systems. This is because the change in the composition that occurs when the target element reaches the level of the main component, and sensitivity changes by this change in the composition. Linear formation of the secondary ion intensity in relation to the concentration of the target element is no longer retained at the level of approximately 1% although this level differs by the main component or the target element.

In the analysis in the depth direction conducted by the sputtering with ion, a factor that greatly affects the resolution in the depth direction is convergence of the spot diameter of the sputtering ion because the convergence affects the bottom shape of the sputtering mark (crater) formed by the sputtering ion. When the spot diameter of the sputtering ion is large, crater bottom will have a mortar shape, and this shape has considerable influence on the area of the crater wall seen from the top, and this invites poor resolution in the depth direction due to the difference in the depth of the information acquired.

An exemplary technique capable of conducting the analysis in the depth direction by using atomic emission is GD-OES (Glow Discharge Optical Emission Spectrometry). In this technique, the sample is sputtered with Ar plasma, and the emitted particles undergo atomic emission in the plasma, and this emission is observed for the analysis in the depth direction. In GD-OES, the composition is quantitatively determined by using the relation that the product of the sputtering speed and the concentration is in correlation with the atomic emission intensity. However, the resolution in the depth direction is poor when the sputtering is conducted with Ar plasma because of the frequent deformation of the crater shape and incapability of separating the information from the crater bottom from the information from the crater wall.

Cathodoluminescence microscope where the light emitted from the sample upon the electron beam irradiation is analyzed for evaluation of crystallinity and defects of the substance are already commercially available. However, the damage given to the sample by the electron gun used as the source of excitation electrons in the cathodoluminescence device is serious due to the high acceleration voltage, and this high acceleration voltage also results in the increase of the electron beam intrusion into the sample. In addition, information in the depth direction cannot be acquired by the sputtering of the sample with the electron beam.

### Prior Art Document

### Non-Patent Document

Non-Patent Document 1: White CW, Simms DL, Tolk NH. Science; 1972; 177: 481.
Non-Patent Document 2: Takeshi Okuya "Spectroscopy of Ion Excitement and Its Application", Chapter 3, Surface Composition Analysis by Neutral and Ion Impact Radiation (SCANIIR) (1987)

### Summary of the Invention

### Problems to Be Solved by the Invention

An object of the present invention is to provide a device which is capable of obtaining emission spectrum in a device used for surface analysis technique. Another object of the present invention is to provide an analytical technique using such device which conducts surface analysis technique such as SIMS and simultaneously obtain atomic emission spectrum or cathodoluminescence with the resolution level of nanometer in the depth direction.

### Means for Solving the Invention

In view of solving the problems as described above, the present invention has the following constitution.

A Method for analyzing a sample wherein the analysis is conducted in the vacuum atmosphere of a surface analyzer device at a degree of vacuum of up to 2 x 10⁻⁹ mbar, and at least one type of ion selected from argon ion, oxygen ion, cesium ion, and cluster ion at an irradiation energy of up to 20 keV is irradiated for sputtering of the sample, and emission spectrum from the sample is separated to analyze the sample in the depth direction simultaneously with any one of the following methods (1) to (3):
(1) a method wherein the sample is sputtered by irradiating the sample with the sputtering ion, and simultaneously, mass of the secondary ion from the sample is analyzed to conduct the analysis in the depth direction.
(2) a method wherein the crater surface formed by the irradiation of the sputtering ion is irradiated with X-ray or electron beam and photoelectron or Auger electron emitted from the sample is separated to conduct the analysis in the depth direction of the sample.
(3) a method wherein the crater surface formed by the irradiation of the sputtering ion is irradiated with a primary ion having low current density to analyze mass of the secondary ion emitted from the sample.

### Advantageous Effect of the Invention

The device of the present invention enables simultaneous analysis of the minute impurities in the material and the analysis in the depth direction of the element of the main component in the resolution in the depth direction at the nanometer level, and also, analysis in the depth direction of defects, impurities, electron structure, and the like is enabled by the measurement of cathodoluminescence using ion sputtering.

### Brief Description of the Drawings

[FIG. 1] This figure is a schematic view of the ion beam-induced atomic emission spectrometer (D-SIMS: optical system example 1) of the present invention.

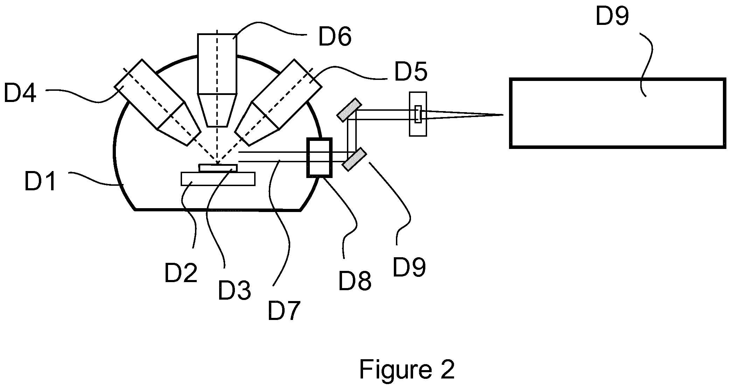

[FIG. 2] This figure is a schematic view of the ion beam-induced atomic emission spectrometer (D-SIMS: optical system example 2) of the present invention.

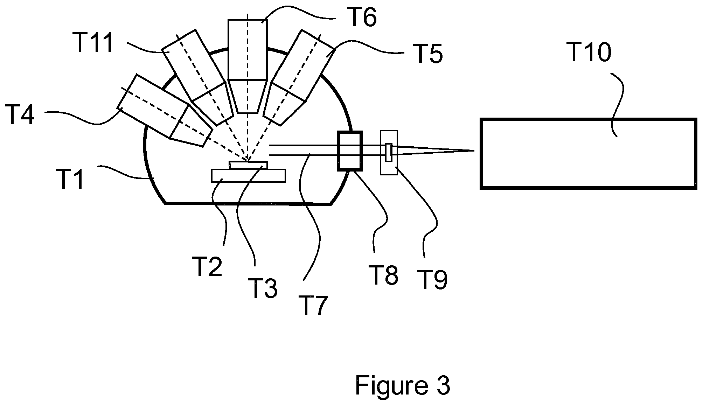

[FIG. 3] This figure is a schematic view of the ion beam-induced atomic emission spectrometer (TOF-SIMS: optical system example 1) of the present invention.

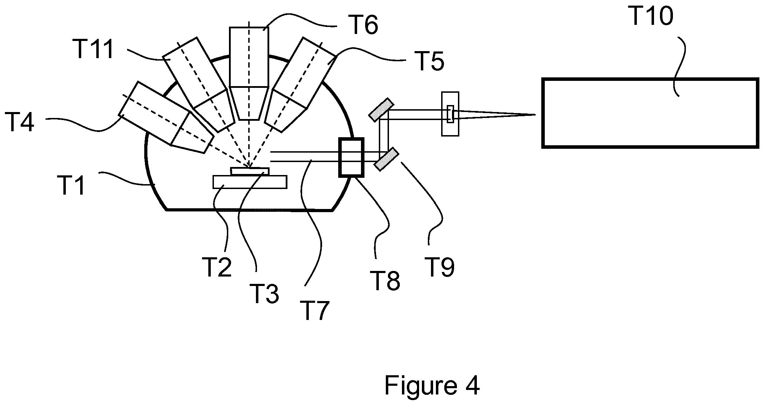

[FIG. 4] This figure is a schematic view of the ion beam-induced atomic emission spectrometer (TOF-SIMS: optical system example 2) of the present invention.

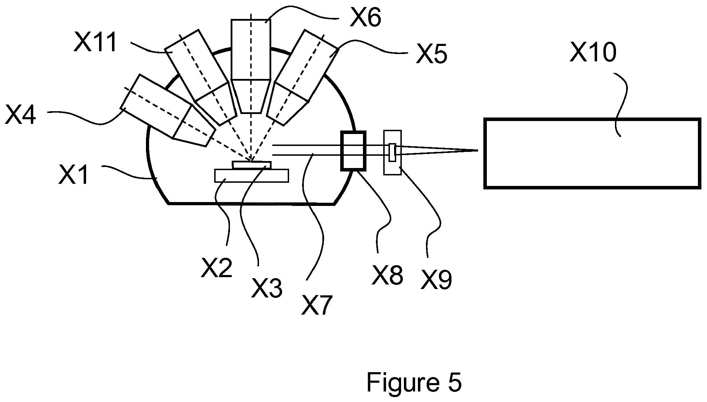

[FIG. 5] This figure is a schematic view of the ion beam-induced atomic emission spectrometer (XPS-AES: optical system example 1) of the present invention.

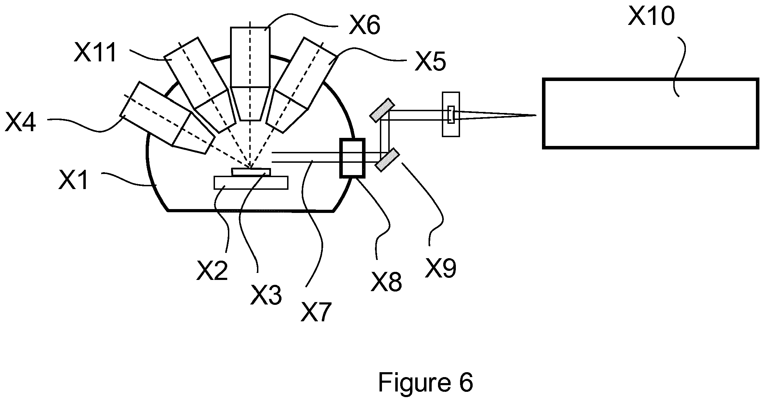

[FIG. 6] This figure is a schematic view of the ion beam-induced atomic emission spectrometer (XPS-AES: optical system example 2) of the present invention.
[FIG. 7] This figures shows the results of the compositional analysis (compositional profile for Al and Ga) in the depth direction by SIMS-OES.
[FIG. 8] This figures shows results of the SIMS-OES simultaneous analysis by SIMS-OES.
[FIG. 9] This figures shows results of the cathodoluminescence analysis by SIMS-CL (SiO₂ film, SiC substrate).

### Preferred Embodiments of the Invention

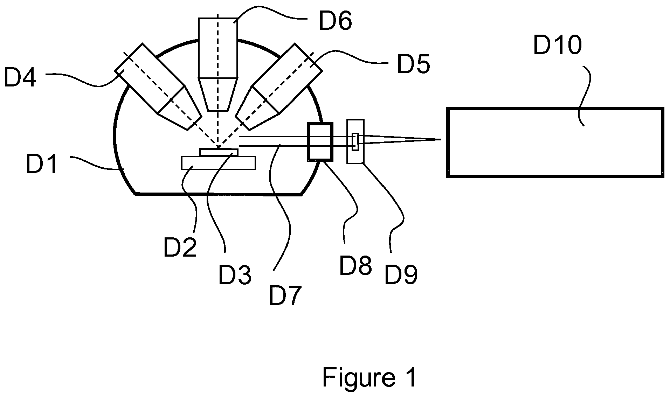

Next, summary of the device and the analysis method of the present invention are described by referring to FIG. 1.

The device of the present invention has a vacuum chamber D1 associated with the SIMS device, a stage and a sample holder D2, a primary ion source D4, an electron beam source D5, a secondary ion optical system D6, and a sample D3 to be measured, and emitted beam D7 from the sample is taken out from a vacuum window D8 allowing confirmation of the position where the sample is irradiated with the ion, the electron beam, or both, guided to a spectrometer D10 through an optical system D9 to thereby conduct the analysis. While the angle of stage and sample holder D2 is preferably adjustable in relation to each of the direction of sputtering ion source D4, electron beam source D5, and the vacuum window D8, the angle of the stage and the sample holder D2 may be fixed. Alternatively, the angle may be adjusted in the course of mounting of the sample D3 to the sample holder.

The vacuum chamber D1 in the device of the present invention is preferably at a degree of vacuum of up to 2 x 10⁻⁹ mbar, and more preferably up to 1 x 10⁻¹⁰ mbar. Use of a lower degree of the vacuum results in the lower limit of the detection in the surface analysis and reduced effects of the noise.

Various types of sputtering ion sources D4 may be used in the device of the present invention, and examples include oxygen, cesium, argon, gas cluster, water cluster, helium, xenon, and neon, and of these, the preferred are argon, oxygen, cesium, and gas cluster. Acceleration energy of the ion irradiated is preferably up to 20 keV. When the acceleration energy is high, resolution in the depth direction will be sacrificed by the effect of the mixing by the ion. Accordingly, the acceleration energy should be adjusted according to the film thickness of the sample to be measured or depth to be measured.

In the device of the present invention, when the sample is irradiated with the ion, the atoms constituting the sample are sputtered, and atomic emission spectrum is observed in the transition of the sputtered atom to the ground state. This observation enables elemental analysis in the depth direction. While the only information available by the conventional SIMS had been distribution of the impurities and the main component element in the depth direction, the device of the present invention has enabled simultaneous measurement of the crystallinity and defect distribution in the depth direction in addition to the information of composition and elements of the sample. This simultaneous measurement of compositional or element information, crystallinity, and defect distribution is also applicable to other analytical techniques where ion sputtering is conducted in the ultra-high vacuum device. Accordingly, the surface analysis technique used in the present invention is not limited to the SIMS, and the technique of the present invention is also applicable to XPS, AES, and TOF-SIMS.

When the surface analysis technique used in the present invention is SIMS and the mass spectrometer used is sector type, the sputtering ion is preferably up to 20 keV. Preferably, the irradiation energy is further reduced depending on the film thickness of the sample to be measured or depth to be measured.

When the surface analysis technique used in the present invention is SIMS and the mass spectrometer used is quadrupole type, the sputtering ion is preferably up to 8 keV. Preferably, the irradiation energy is further reduced depending on the film thickness of the sample to be measured or depth to be measured.

When the surface analysis technique used in the present invention is SIMS and the mass spectrometer used is time-of-flight type, the irradiation energy is preferably up to 5 keV when the sputtering ion is oxygen or cesium ion. The irradiation energy is preferably up to 20 keV when the sputtering ion is cluster ion.

The sputtering ion used in the present invention preferably has a radius of less than 50 µm when the irradiation energy is at least 8 keV. The radius is preferably less than 100 µm when the irradiation energy is less than 8 keV, and the radius is preferably less than 200 µm when the irradiation energy is less than 5 keV.

When the composition is analyzed by using atomic emission by using the device of the present invention, provision of an electric gate as in the case of the SIMS is difficult. Accordingly, outer periphery of the target crater is preferably dug in advance to exclude the influence of the crater edge. This reduces influence of the crater edge and improves the resolution in the depth direction.

In the device used in the present invention, the electron beam source D5 for charge compensation used for compensating the charge resulting from the irradiation of the ion or X-ray is not particularly limited for its type, and exemplary types include thermionic emission type, field emission type, and Schottky Emission type (also called "thermal field emission" type). When the cathodoluminescence emitted from the sample is evaluated by using this electron beam, the irradiation energy of the electron beam is preferably up to 3 keV. Use of such electron beam enables collection of the information from the area much shallower than typical cathodoluminescence. Accordingly, use of a lower acceleration energy is desirable as long as the emission intensity can be obtained. Since the cathodoluminescence of the sputtered surface can be measured simultaneously with the sputtering of the sample with ion, the crystallinity, defects, and the like of the sample can be evaluated with the resolution in the depth direction in nanometer level.

The vacuum window D8 used in the device of the present invention is preferably made of a material permitting penetration of the beam with the wavelength corresponding to the subject to be measured.

In the device of the present invention, the emitted beam D7 is taken out from the vacuum window D8, and thus taken out emitted beam D7 should be efficiently guided to the spectrometer D10 and the optical system D9 such as lens, optical fiber, or converging mirror is used for this purpose. This converging means is preferably placed within 30 cm from the sample D3 to suppress the sensitivity loss. It is to be noted that a part of the optical system D9 may be placed in the vacuum chamber. In the case of a device such as XPS and AES, this distance is preferably within 50 cm when the irradiation energy of the sputtering ion is up to 10 keV.

The device of the present invention has enabled simultaneous analysis in the depth direction by conducting the surface analysis using the secondary ion optical system D6 while separating the emitted beam D7.

### Examples

Next, the merits of present invention are described in further detail by referring to Examples.

### (Example 1) Quantitative analysis of the composition of the compound material

SIMS 4550 manufactured by FEI (a quadrupole SIMS analyzer) was used. The normal ultimate vacuum degree of the vacuum chamber of the device was up to 1 x 10⁻¹⁰ mbar. An optical lens was placed at a position in the atmosphere to thereby collect the light from the sample stage in the vacuum chamber to the spectrometer through the vacuum window. The position of the optical lens was 25 cm from the sample stage. The optical lens was connected to a spectrometer microHR by HORIBA, Ltd. equipped with a CCD detector Sincerity manufactured by HORIBA, Ltd. The spectrometer was placed on the XYZ stage for fine adjustment of the converging lens position.

Of the oxygen ions, O₂⁺ ion was used for the primary ion of the SIMS, and the scanning was conducted at an acceleration energy of 3 keV, an incident angle of 45°, a current amount of 100 nA, a spot diameter 20 µm, and a luster size of 150 µm. In this process, the position of the optical lens was at a position 90° to the sample. The evaluation was conducted without using the vacuum gauge to avoid the influence of the emission from the filament of the vacuum gauge.

A groove density of 300 gr/mm and a blaze wavelength of 500 nm were used for the diffraction grating of the spectrometer. With regard to the exposure of the CCD, leakage of exterior light or the like was measured as dark before each analysis after moving the sample to be measured to the position of the analysis, and this value was subtracted at the time of the analysis. The exposure was conducted for 5 seconds in total.

The sample evaluated was a compound semiconductor sample having a laminate structure. The laminate structure and the design value of the compositional ratio of each layer was In(Al_{0.25}Ga_{0.75})P/In(Al_{0.50}Ga_{0.50})P/In(Al_{0.70}Ga_{0.30})P/ GaAs-sub, and the laminate was the one comprising films each having a thickness of 200 nm.

CCD exposure was started at a timing slightly before the start of the sputtering by the ion. The timing at the start of the atomic emission spectrum was considered as the start time of the sputtering.

Depth profile of the atomic emission spectrum of the Al and Ga was obtained from the thus obtained spectra by assuming that Al is at 396 nm and Ga is at 403 nm. Sputtering speed of Al and Ga in the film obtained by separate measurement and calculation was used for the calculation of x axis. By using the relation of "Emission intensity = constant x sputtering speed x concentration", concentration at each depth can be determined from the constant preliminarily determined by using samples of known concentration and the emission intensity and the sputtering speed at each depth.

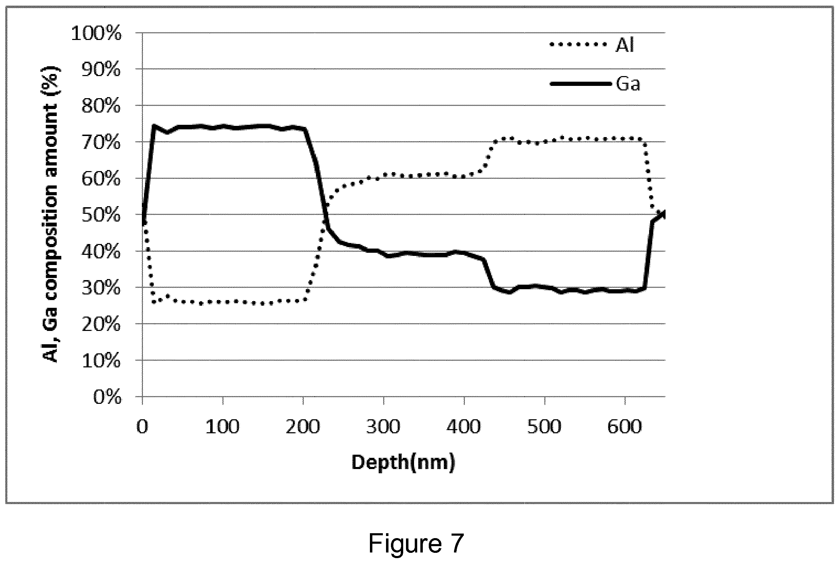

The results of the actual evaluation using the sample are shown in FIG. 7. Change in the concentration of the Al and Ga in depth direction has been confirmed, and the value of the composition was consistent with the designed value. The effectiveness of this technique was thereby confirmed.

### (Example 2) Simultaneous measurement with SIMS and high resolution in depth direction

The following sample was evaluated by using device constitution as used in Example 1. The laminate structure was In(Al_{0.70}Ga_{0.30})P/ In(Al_{0.50}Ga_{0.50})P/ In(Al_{0. 70}Ga₀₃₀)P/ In(Al₀₂₅Ga_{0.75})P/ In(Al_{0.70}Ga₀₃₀)P/ In(Al₀₅₀Ga_{0.50})P/In(Al₀₇₀Ga₀₃₀)P / GaAs-sub, and the film thickness was respectively 100 nm / 10 nm / 10 nm / 10 nm / 10 nm / 10 nm / 300 nm / substrate.

The CCD exposure was started at a timing slightly before the start of the analysis by the SIMS. The timing at the start of the emission spectrum was considered as the start time of the SIMS analysis so that origin point in x axis is consistent with the SIMS data.

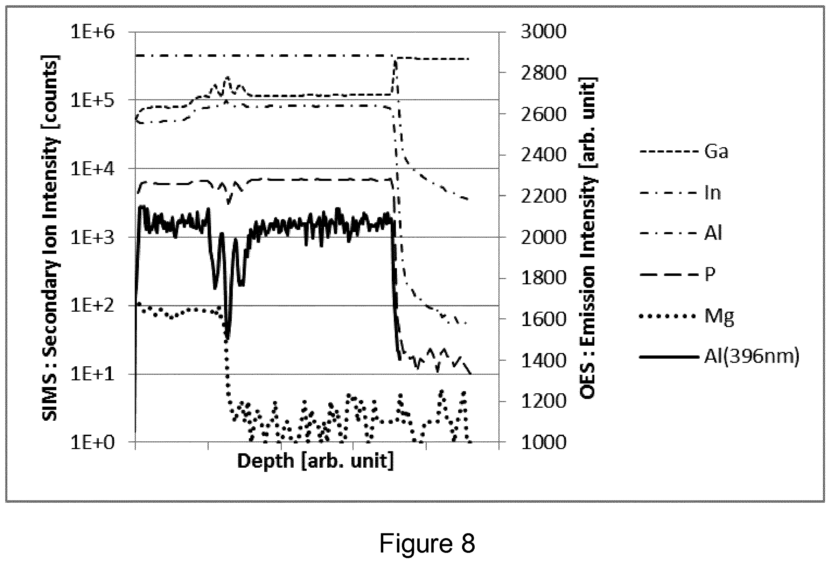

In FIG. 8, the depth profile obtained from the atomic emission spectrum of Al is simultaneously shown with the profile of the SIMS. While the sample is the one having a laminate structure with different composition in every 10 nm in the depth over 100 nm, the depth profile obtained from the atomic emission spectrum of Al was confirmed to undergo the change corresponding to the change in the composition at the same depth as the SIMS. This in turn indicated that a data having a high resolution in the depth direction can be obtained by using the sputtering ion having a high convergence.

As shown in the data obtained in the SIMS, depth profile of the impurity Mg is simultaneously obtained, and this indicates that the evaluation of the main component and the depth profile of the impurities can be obtained at once.

### (Example 3) Ultra low acceleration cathodoluminescence

In the device constitution as used in Examples 1 and 2, the position of the optical lens was changed to the position of 75° to the sample. It is to be noted that the sputtering ion was not used.

The electron beam used for obtaining the cathodoluminescence was at an acceleration energy of 500 eV, a current amount of 5 µA, an incident angle of 15°, and a tilt angle of 45°.

A groove density of 300 gr/mm and a blaze wavelength of 250 nm were used for the diffraction grating of the spectrometer. With regard to the exposure of the CCD, leakage of exterior light or the like was measured as dark before each analysis after moving the sample to be measured to the position of the analysis, and this value was subtracted at the time of the analysis. The exposure was conducted for 5 seconds in total.

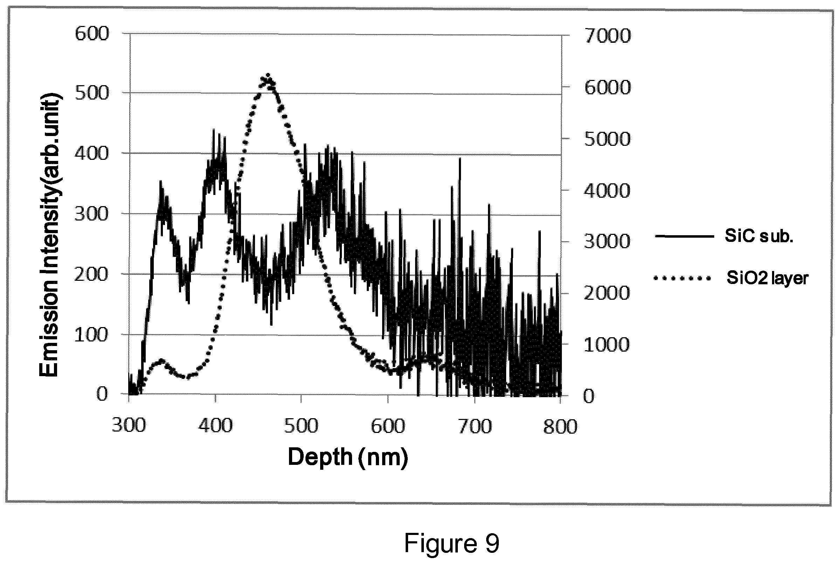

The sample used for the evaluation was a sample prepared by depositing a SiO₂ film of about 40 nm on a SiC substrate. FIG. 9 shows the data of the cathodoluminescence obtained by using an electron beam of ultra-low acceleration at 500 eV. The cathodoluminescence data obtained from the same SiC substrate is also shown. When these data are compared, the data obtained from the SiO₂ film on the SiC substrate was not affected by the peak corresponding to the band-edge emission near 390 nm only exhibited in the SiC substrate, and this means that the data obtained is only the data from the very shallow area due to the very low acceleration energy of the electron beam.

### Industrial applicability

The ion beam-induced atomic emission spectrometer and analysis method using such device of the present invention contribute not only to the analytical device industry but also to the improvement in the quality and yield of the products through the analysis of the state of the products to their minute parts in the fields including the industry of electronic parts.

### Explanation of Numerals

D1: vacuum chamber of SIMS device
D2: stage and sample holder
D3: sample
D4: primary ion source
D5: electron beam source
D6: optical system for the secondary ion
D7: emitted beam (atomic emission, cathodoluminescence)
D8: vacuum window
D9: optical system
D10: spectrometer
T1: vacuum chamber of TOF-SIMS device
T2: stage and sample holder
T3: sample
T4: primary ion source
T5: electron beam source
T6: optical system for the secondary ion
T7: emitted beam (atomic emission, cathodoluminescence)
T8: vacuum window
T9: optical system
T10: spectrometer
T11: sputtering ion source
X1: vacuum chamber of XPS or AES device
X2: stage and sample holder
X3: sample
X4: light source (X-ray, electron beam)
X5: electron beam source
X6: electron spectrometer
X7: emitted beam (atomic emission, cathodoluminescence)
X8: vacuum window
X9: optical system
X10: spectrometer
X11: sputtering ion source

## Claims

1. A Method for analyzing a sample wherein
the analysis is conducted in vacuum atmosphere at a degree of the vacuum of up to 2 x 10⁻⁹ mbar,
the sample is irradiated with sputtering ion and irradiation energy of the sputtering ion is the one selected from at least 8 keV with the spot diameter of less than 50 µm, less than 8 keV with the spot diameter of less than 100 µm, and less than 5 keV with the spot diameter of less than 200 µm,
at least one type of ion selected from argon ion, oxygen ion, cesium ion, and cluster ion is irradiated for sputtering of the sample, and outer periphery of the target crater is preliminarily dug to eliminate the influence of crater edge, and emission spectrum from the sample is separated to analyze the sample in the depth direction simultaneously with the following method (1):
(1) the sample is sputtered by irradiating the sample with the sputtering ion, and simultaneously, mass of the secondary ion from the sample is analyzed to conduct the analysis in the depth direction.

2. An analysis method according claim 1 wherein optical system of spectrometer or emission detector for separating the emission spectrum from the sample is provided at a position within the radius of up to 30 cm from the position where the sputtering ion is irradiated.

3. An analysis method according claim 2 wherein the secondary ion mass spectrometry is conducted by using a sector mass spectrometer.

4. An analysis method according to claim 2 wherein the secondary ion mass spectrometry is conducted by using a quadrupole mass spectrometer, and irradiation energy of the sputtering ion is up to 8 keV.

5. An analysis method according to claim 1 wherein the secondary ion mass spectrometry is conducted by using a time-of-flight mass spectrometer, and the sputtering ion is either one selected from the following (4) and (5):
(4) sputtering ion is oxygen ion or cesium ion, and the irradiation energy is up to 5 keV, and
(5) sputtering ion is cluster ion, and the irradiation energy is up to 20 keV.

6. An analysis method according to claim 1 wherein the irradiation energy of the sputtering ion is up to 10 keV, and optical system of spectrometer or emission detector for separating the emission spectrum from the sample is provided at a position within the radius of up to 50 cm from the position where the sputtering ion is irradiated.

7. An analysis method according to any one of claims 1 to 6 wherein the degree of vacuum is less than 1 x 10⁻¹⁰ mbar.

8. An analysis device provided with the analysis method according to any one of claims 1 to 7.
